# EUROPÄISCHE PATENTSCHRIFT

(11) **EP 0 720 900 B1**
(45) Veröffentlichungstag und Bekanntmachung des Hinweises auf die Patenterteilung: **31.03.1999**
(21) Anmeldenummer: 95114180.3
(22) Anmeldetag: 09.09.1995
(51) Int. Cl.: B29C 44/32, A47C 31/02

(54) **Schaumteil mit eingeschäumtem Befestigungselement und Verfahren zu dessen Herstellung**
Foam part with incorporated connecting element and method for its manufacture
Partie en mousse comprenant un élément de fixation et procédé pour sa production

(30) Priorität: 23.12.1994 DE 4446450
(43) Veröffentlichungstag der Anmeldung: 10.07.1996
(73) Patentinhaber: Johnson Controls GmbH & Co. KG, 32339 Espelkamp (DE)
(72) Erfinder: Grund, Wolfgang, D-32425 Minden (DE); Steinmeier, Horst, D-32312 Lübbecke (DE); Habersatter, Matthias, D-84066 Mallersdorf-Pfaffenberg (DE)
(74) Vertreter: KEIL & SCHAAFHAUSEN

(56) Entgegenhaltungen:
- EP-A- 0 286 446
- WO-A-94/19209
- DE-A- 2 234 864
- DE-U-29 506 306
- FR-A- 2 361 512
- NL-A- 6 904 047
- US-A- 3 840 269

## Beschreibung

Die Erfindung betrifft ein Schaumteil nach dem Oberbegriff des Anspruchs 1 sowie ein Verfahren zur Herstellung des Schaumteils.

Rückenlehnen, Sitzflächen und dgl. von Fahrzeugsitzen werden zunehmend mit Schaumteilen aus Polyurethan (PUR) gepolstert und anschließend mit Bezügen aus Stoff, Leder oder dgl. überzogen. Zur Herstellung der Schaumteile wird flüssiges Polyurethan in eine Form eingespritzt, die anschließend geschlossen und beheizt wird, so daß das Polyurethan aufschäumt und das Schaumteil die gewünschte Form erhält. Damit an dem Sitz bzw. dem Schaumteil die Bezüge befestigt werden können, sind in dem Schaumteil sogenannte Einlege- oder Garnierdrähte eingeschäumt, an denen entsprechende in den Bezügen vorgesehene Drähte über aufklemmbare Ringe oder dgl. befestigbar sind. Die Garnierdrähte werden vor dem Einbringen des flüssigen Polyurethans in die Form eingelegt und über Magnete und Haltestifte an den entsprechenden Stellen in der Form gehalten, damit sie beim Einspritzen und Aufschäumen des Polyurethans nicht verschoben werden. Die Garnierdrähte werden dabei vollständig in das Schaumteil eingeschäumt, wobei lediglich an den Haltepunkten Freiräume verbleiben, die einen Zugang zu den Drähten zum anschließenden Befestigen der Bezüge ermöglichen. Die Metalldrähte sind in ihrer Herstellung relativ teuer, da sie in unterschiedlichen Längen und Formen hergestellt werden müssen. So werden in einzelnen Rückenlehnen bis zu 17 Garnierdrähte eingebracht, die zum einen unterschiedlich lang sind und zum anderen auch recht kompliziert gebogen sind, um eine Berührung benachbarter Drähte zu vermeiden, die zu störenden Knarrgeräuschen bei einer Relativbewegung der Drähte führen würden. Die Biegungen sollen ferner eine "Verkrallung" der Garnierdrähte im Schaumteil bewirken, so daß die aufnehmbaren Ausreißkräfte erhöht werden. Abgesehen von der aufwendigen Herstellung bereiten die Metalldrähte aber auch Probleme bei der Entsorgung ausgedienter Schaumteile. Da die Schaumteile mit eingeschäumten Einlegedrähten nicht sortenrein sind, müssen die Drähte vor der Entsorgung entfernt werden, was bisher über Herausreißen per Hand erfolgt. Erst anschließend können die nun sortenreinen Schaumteile zur Zerkleinerung bspw. einer Schredderanlage zugeführt und als Recyclat zur Herstellung neuer Schaumteile wiederverwendet werden. Hierzu müssen selbstverständlich zuvor die Metalldrähte entfernt sein. Als Alternative kommt bisher lediglich eine thermische Entsorgung - also Verbrennung - in Betracht. Ein weiterer Nachteil liegt in der Vielzahl der unterschiedlichen Drähte, die für ein Schaumteil benötigt werden. Diese müssen innerhalb der relativ kurzen Taktzeit des für die Herstellung derartiger Schaumteile verwendeten Montagebandes in die Form eingelegt werden, so daß der Bediener genau wissen muß, welcher Draht wohin gehört, da ihm für längere Überlegungsphasen oder Überprüfungen in der Arbeitsanweisung in der Regel keine Zeit bleibt. Dabei muß er sich zudem von Fahrzeugtyp zu Fahrzeugtyp umstellen, da Anordnung und Auswahl der Garnierdrähte bei jedem Schaumteil variieren. Berücksichtigt man, daß bei den unterschiedlichen Modelltypen und Fahrzeugherstellern weit über hundert verschiedene Garnierdrähte verwendet werden, wird deutlich, welche Anforderungen an denjenigen gestellt werden, der die Einlegedrähte in die Form einsetzt. Werden die Drähte falsch angeordnet, so führt dies dazu, daß das gesamte Schaumteil als Ausschuß ausgeschieden werden muß, da die Drähte ggf. aus dem Schaumteil herausstehen oder eine ordnungsgemäße Befestigung der Bezüge nicht mehr möglich ist. Angesichts der vielfältigen Nachteile der herkömmlicherweise in derartige Schaumteile eingeschäumten metallischen Garnierdrähte wurde bereits nach Lösungen gesucht, die einen Verzicht auf Metalldrähte ermöglichen. So werden stattdessen Plastikstäbe eingesetzt, die jedoch weitgehend dieselben Nachteile aufweisen wie die Metalldrähte. Auch wurde vorgeschlagen, die Bezüge über lösbare Haftverschlüsse an den Schaumteilen zu befestigen. Hierdurch läßt sich jedoch keine ausreichend feste Verbindung zwischen Bezug und Schaumteil erreichen. Außerdem ist die Befestigung der Haftverschlüsse an dem Schaumteil und den Bezügen schwierig und daher teuer.

Aus der DE-OS 19 21 446 ist ein nahtloser Schaumstoffschlauch bekannt, der aus zwei koaxial ineinander angeordneten nahtlosen geschlossenzelligen Schaumstoffprofilen besteht. Zwischen den beiden Schaumstoffschichten ist eine netzartige Verstärkungssicht vorgesehen.

Die FR-A-2 361 512 beschreibt ein Konstruktionspaneel zur Verwendung in Dächern oder Fußböden. Es wird aus einem aufgeschäumten Polymermaterial hergestellt und weist eingebettete Rahmenelemente auf, um auf separate Tragebalken verzichten zu können. Die Versteifungselemente sind vor dem Einschäumen in das Polymermaterial jedoch nicht umschäumt.

Die WO-A-94/19209 beschäftigt sich mit der Herstellung von Fahrzeugsitzen, jedoch wird bei Herstellung des Sitzelementes ein Beckenstützelement aus steifem Polyurethan mit dem weicheren Sitzschaum umschäumt. Das harte Kunststoffelement soll lediglich das Becken des Sitzenden stützen und hat mit der Befestigung von Sitzbezügen nichts zu tun. Es ist durchgehend homogen ausgebildet.

Aufgabe der Erfindung ist es daher, unter Vermeidung der Verwendung von Metalldrähten eine einfach herstellbare und zuverlässige Verbindung zwischen einem Schaumteil und einem Bezug zu ermöglichen.

Diese Aufgabe wird mit der Erfindung im wesentlichen durch ein Schaumteil mit den Merkmalen des Anspruchs 1 und durch ein Verfahren zur Herstellung eines Schaumteils gemäß Anspruch 7 gelöst. Bevorzugte Ausführungen des Schaumteils sind in den Ansprüchen 2 bis 6 definiert. Das geschäumte Befestigungselement kann auf ähnliche Weise wie die herkömmlichen Garnierdrähte in die Form eingelegt und mit Polyurethan oder dgl. umschäumt werden. Hierdurch wird ein im Sinne der Wiederverwertung sortenreines Schaumteil gebildet, das nach seiner Verwendung problemlos zerkleinert, bspw. geschreddert, und einer Wiederverwertung zugeführt werden kann. Das mit Polyurethan umschäumte Trägerprofil besitzt eine ausreichende Steifigkeit, um einem daran befestigten Bezug einen ausreichenden Halt an dem Schaumteil zu geben. Ferner wird das Gewicht des fertigen Schaumteils reduziert, da die relativ schweren Metalldrähte entfallen. Da bei einander berührenden Befestigungselementen keine störende Geräusche verursachenden Metallkontakte mehr vorliegen, kann auf die zur Vermeidung derartiger Berührungspunkte bisher erforderlichen komplizierten Drahtformen verzichtet werden, so daß die Herstellungskosten der Befestigungselemente weiter verringert werden. Dem Bediener wird ferner das Einlegen der Befestigungselemente erleichtert, da er nur noch unterschiedliche Längen, aber keine verschiedenen Formen mehr berücksichtigen muß. Dies verringert die Fehlergefahr und damit den entstehenden Ausschuß.

Gemäß einer bevorzugten Ausgestaltung der Erfindung besteht das Trägerprofil aus Polyethylen, Jute, Gaze, Flies oder dgl.. Hierdurch wird gewährleistet, daß bei einfacher Herstellbarkeit des Trägerprofils eine zuverlässige Verbindung zu dem umschäumenden Polyurethan erreicht wird.

Das Trägerprofil weist erfindungsgemäß einen U-förmigen, kreisförmigen oder rechtförmigen Querschnitt auf, wobei selbstverständlich auch beliebige andere Querschnitte verwendet werden können.

Um den Halt des Befestigungselements in dem Schaumteil zu verbessern, ist bei einer Weiterbildung der Erfindung vorgesehen, daß das Trägerprofil wenigstens einen vorzugsweise parallel zur Mittelebene des Schaumteils auskragenden Halteabschnitt aufweist. Hierdurch lassen sich die für eine Trennung des Befestigungselements von dem Schaumteil notwendigen Ausreißkräfte wesentlich erhöhen, da sich das Befestigungselement richtiggehend in dem Schaumteil verkrallt.

Eine weitere Erhöhung der Ausreißkräfte läßt sich dadurch erreichen, daß der wenigstens eine Halteabschnitt nicht mit Polyurethan umschäumt ist. Dieser wird vielmehr erst beim Aufschäumen des Schaumteils selbst eingeschäumt, so daß durch die durchgängige Verbindung des Polyurethans des Schaumteils mit dem Netzwerk des Halteabschnitts eine noch festere Verbindung erreicht wird.

Gemäß einer Ausgestaltung der Erfindung wird für den das Trägerprofil umgebenden Polyurethanschaum wenigstens zum Teil Recyclat verwendet. Dabei kann der Recyclatanteil gegenüber sonstigen Anwendungen wesentlich erhöht werden, da es auf die Formstabilitäts- und Elastizitätseigenschaften der Befestigungselemente nicht in gleichem Maße ankommt wie bei sonstigen Anwendungen.

Bei der Herstellung der Schaumteile, bei der die Befestigungselemente in eine beheizbare Form eingelegt werden, anschließend flüssiges Polyurethan oder dgl. eingefüllt und die Form geschlossen und erwärmt wird, so daß das Polyurethan aufschäumt, werden erfindungsgemäß die Befestigungselemente in in der Form vorgesehene Halterungen eingeklemmt. Durch die Elastizität der Befestigungselemente wird ein solches Einklemmen ermöglicht, wobei durch geeignete Anordnung der Halterungen auch beliebige Formen der Befestigungselemente in dem Schaumteil vorgesehen werden können. Die bisher üblichen aufwendigen Halterungen der Garnierdrähte über Magnete kann entfallen, so daß die Herstellungskosten der Form wesentlich gesenkt werden können. Gleichzeitig wird eine zuverlässige Halterung der Befestigungselemente in den Klemmen gewährleistet.

Die Herstellung des Befestigungselements erfolgt bspw. über eine beheizbare Endlosform, der das Trägerprofil kontinuierlich zugeführt und durch die es gefördert wird, wobei parallel zu dem Trägerprofil flüssiges Polyurethan in die Endlosform eingebracht wird und unter Wärmeeinwirkung aufschäumt, so daß das Trägerprofil wenigstens teilweise von dem Polyurethanschaum umgeben wird. Die Länge der Endlosform kann dabei an die Reaktionszeit des Polyurethanschaums angepaßt sein.

Um den Herstellungsaufwand zu reduzieren, kann das Trägerprofil mit dem umgebenden Polyurethanschaum vor dem Aushärten des Polyurethans über Umlenkrollen oder dgl. in die gewünschte Form gebracht werden. Dadurch läßt sich die Gestaltung der Endlosform bzw. des Mischkopfes der Extrusionsvorrichtung wesentlich vereinfachen.

Das als kontinuierlicher Strang geformte Befestigungselement wird auf Rollen aufgewickelt, von denen anschließend die gewünschten Längen der Befestigungselemente abgelängt werden können. Vorzugsweise erfolgt das Ablängen der Befestigungselemente

direkt an der Produktionseinheit der Schaumteile. Für jede Variante des zu produzierenden Schaumteils können dabei die erforderlichen Längen der Befestigungselemente vor Ort oder über eine programmierte Steuerung bestimmt werden, so daß eine aufwendige Lagerhalterung für die jeweils unterschiedlichen Befestigungselementsätze entfallen kann.

Weiterbildungen, Vorteile und Anwendungsmöglichkeiten der Erfindung ergeben sich aus der nachfolgenden Beschreibung von Ausführungsbeispielen und der Zeichnung.

Es zeigen:
- Fig. 1: einen Querschnitt durch ein Befestigungselement,
- Fig. 2: schematisch die Herstellung eines Befestigungselements,
- Fig. 3: schematisch einen Abschnitt einer Form zur Herstellung eines Schaumteils mit einem Befestigungselement und
- Fig. 4: einen Teilschnitt durch ein Schaumteil mit einem Befestigungselement.

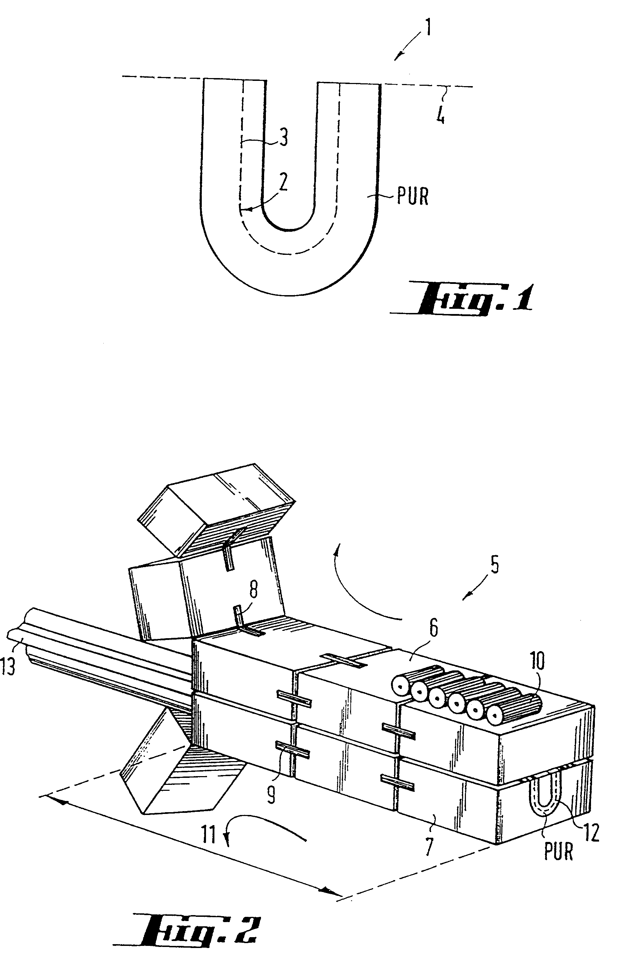

Ein in Fig. 1 dargestelltes Befestigungselement 1, das zur Befestigung von Bezügen in bspw. als Auflage für Rückenlehnen oder dgl. von Fahrzeugsitzen verwendeten Schaumteilen eingeschäumt wird, besteht aus einem Trägerprofil 2, das teilweise mit Polyurethan (PUR) oder dgl. umschäumt ist.

Bei dem in Fig. 1 dargestellten Ausführungsbeispiel ist das Trägerprofil 2 im wesentlichen U-förmig ausgebildet, wobei sich an die Schenkel 3 der U-Form jeweils etwa waagerecht nach außen auskragende Halteabschnitte 4 anschließen. Das Trägerprofil 2 besteht aus einem grobmaschigen Netzwerk aus Polyethylen, Jute, Gaze, Flies oder dgl.. Hierbei ist das Material weitgehend beliebig wählbar, solange sichergestellt ist, daß das Netzwerk von dem Schaummaterial durchtränkbar und problemlos einschäumbar ist. Ferner sind abgesehen von der beispielhaft dargestellten U-Form des Trägerprofils 2 auch beliebige andere Formen, bspw. ein kreisförmiger oder rechteckiger Querschnitt des Trägerprofils 2 möglich. Auch hierbei ist vor allem von Bedeutung, daß das Trägerprofil 2 auf einfache Weise mit dem Schaummaterial durchtränkbar und einschäumbar ist.

Die Herstellung des Befestigungselements 1 erfolgt gemäß einer ersten Ausführungsform der Erfindung in einer in Fig. 2 dargestellten Endlosform 5. Die Endlosform 5 besteht aus einer Vielzahl von Oberformabschnitten 6 und Unterformabschnitten 7, die über Gelenke 8, 9 jeweils mit benachbarten Oberformabschnitten 6 bzw. Unterformabschnitten 7 verbunden sind. Die Ober- und Unterform 6, 7 sind über einen lediglich für die Oberform 6 schematisch angedeuteten Förderantrieb 10 antreibbar und führen dabei das Trägerprofil mit. Die einzelnen Formabschnitte 6, 7 werden wie durch Pfeile angedeutet im Kreislauf geführt, so daß die Oberform 6 und die Unterform 7 lediglich entlang der Formstrecke 11 einander gegenüberliegen und parallel geführt werden. Nach der Formstrecke 11 trennen sich die Ober- und Unterformabschnitte 6, 7 und werden dem Anfang der Formstrecke 11 zugeführt.

Der Formstrecke 11 wird kontinuierlich ein vorgefertigtes, bspw. von nicht dargestellten Rollen abgewickeltes Trägerprofilband 12 zugeführt, das zwischen Ober- und Unterform 6, 7 aufgenommen wird. Der Formstrecke 11 wird ferner flüssiges Polyurethan (PUR) oder dgl. zugeführt, das auf der Formstrecke 11 durch Aufheizen bspw. der Unterform 7 aufschäumt und den Trägerprofilstrang 12 wenigstens teilweise umgibt. Klappen am Ende der Formstrecke 11 die Oberformabschnitte 6 und die Unterformabschnitte 7 auseinander, so wird ein Befestigungselementstrang 13 freigegeben, der bspw. auf nicht dargestellten Rollen aufgewickelt werden kann. Um beim Trennen der Ober- und Unterformabschnitte 6, 7 am Ende der Formstrecke 11 eine problemlose Freigabe des Befestigungselementstrangs 13 zu ermöglichen, sind die Ober- und Unterformabschnitte 6, 7 beschichtet oder bestehen aus Kunststoff. Die Länge der Endlosform hängt von der Reaktionszeit des Polyurethans ab.

Um die Gestaltung der Endlosform 5 zu erleichtern, kann dieser ein im wesentlichen unprofilierter Trägerprofilstrang 12 zugeführt werden, der erst nach Aufbringen des Polyurethans oder dgl. und vor dessen Aushärtung bspw. über nicht dargestellte Umlenkrollen oder dgl. zu dem gewünschten Profil geformt wird.

Der derart auf Rollen aufgewickelte Befestigungselementstrang 13 kann nun den Produktionseinheiten zugeführt werden, an denen die Befestigungselemente 1 in Formen 18 zur Herstellung von Schaumteilen 19 eingelegt werden. Denn zweckmäßigerweise erfolgt die Ablängung der Befestigungselemente 1 von dem Befestigungselementenstrang 13 erst an der Produktionseinheit, so daß eine aufwendige Lagerung der einzelnen Befestigungselemente 1 vermieden wird. Da in vielen Fällen für ein Schaumteil 19 Befestigungselemente 1 verschiedener Längen benötigt werden, kann dies in der Steuerung der Ablängvorrichtung entsprechend berücksichtigt werden.

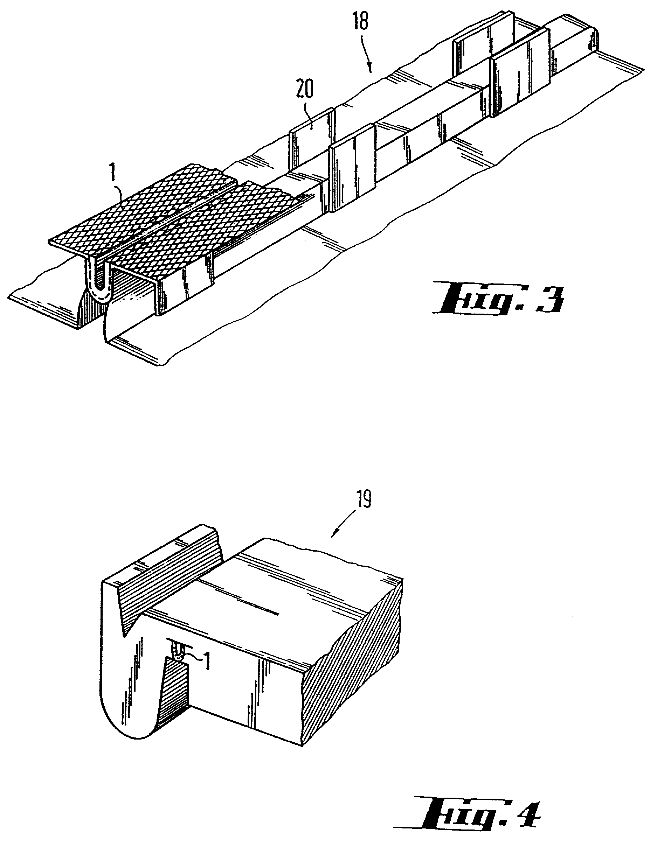

Die Befestigungselemente 1 werden, wie in Fig. 3 dargestellt, in in der Form 18 vorgesehene Halteklemmen 20 eingeklemmt, wobei sie aufgrund ihrer Elastizität leicht in die Halteklemmen 20 eingesetzt und durch die Klemmspannung zuverlässig gehalten werden. Sind die Befestigungselemente 1 in die Form 18 eingesetzt, so wird auf herkömmliche Weise flüssiges Polyurethan eingespritzt und die Form 18 geschlossen und erwärmt, so daß das Polyurethan aufschäumt und die Befestigungselemente 1 vollständig einschäumt.

In Fig. 4 ist ausschnittsweise ein Schaumteil 19 mit eingeschäumtem Befestigungselement 1 dargestellt. Da das Trägerprofil 2 des Befestigungselements 1 nur teilweise vorher mit Polyurethan umschäumt wurde, erfolgt die Umschäumung der auskragenden Halteabschnitte 4 erst beim Aufschäumen des Schaumteils 19. Dadurch wird eine Verkrallung des Befestigungselements 1 in dem Schaumteil 19 erreicht, so daß wesentlich höhere Ausreißkräfte aufgenommen werden können, als bei herkömmlichen Garnierdrähten aus Metalldraht. Werden derart hohe Ausreißkräfte nicht benötigt, so kann auf die zusätzlichen Halteabschnitte 4 des Trägerprofils 2 verzichtet werden.

Ein mit derartigen Befestigungselementen 1 versehenes Schaumteil 19 ist wesentlich leichter als mit herkömmlichen Garnierdrähten versehene Schaumteile und zudem problemlos recyclebar, da das Schaumteil 19 direkt einer Zerkleinerungsmaschine zugeführt werden kann, und es nicht erforderlich ist, zuvor die Befestigungselemente 1 zu entfernen.

### Bezugszeichenliste:

- 1: Befestigungselement
- 2: Trägerprofii
- 3: Schenkel
- 4: Halteabschnitte
- 5: Endlosform
- 6: Oberformabschnitt
- 7: Unterformabschnitt
- 8: Gelenk
- 9: Gelenk
- 10: Förderantrieb
- 11: Formstrecke
- 12: Trägerprofilstrang
- 13: Befestigungselementstrang
- 18: Form
- 19: Schaumteil
- 20: Halteklemme
- PUR: Polyurethan

## Patentansprüche

1. Schaumteil aus Polyurethan oder dgl., insbesondere zur Verwendung als Auflage für Rückenlehnen, Sitzflächen oder dgl. von Fahrzeugsitzen, mit eingeschäumten Befestigungselementen (1) für die Befestigung von Bezügen, **dadurch gekennzeichnet,** daß die Befestigungselemente (1) ein aus einem vorzugsweise grobmaschigen Netzwerk bestehendes Trägerprofil (2) aufweisen, das vor dem Einschäumen in das Schaumteil (19) wenigstens teilweise mit Polyurethan (PUR) oder dgl. umschäumt ist.

2. Schaumteil nach Anspruch 1, **dadurch gekennzeichnet,** daß das Trägerprofil (2) aus Polyethylen, Jute, Gaze, Flies oder dgl. besteht.

3. Schaumteil nach Anspruch 1 oder 2, **dadurch gekennzeichnet,** daß das Trägerprofil (2) einen U-förmigen, kreisförmigen oder rechteckigen Querschnitt aufweist.

4. Schaumteil nach einem der Ansprüche 1 bis 3, **dadurch gekennzeichnet,** daß das Trägerprofil (2) wenigstens einen vorzugsweise parallel zur Mittelebene des Schaumteils (19) auskragenden Halteabschnitt (4) aufweist.

5. Schaumteil nach Anspruch 4, **dadurch gekennzeichnet,** daß der wenigstens eine Halteabschnitt (4) nicht mit Polyurethan (PUR) umschäumt ist.

6. Schaumteil nach einem der Ansprüche 1 bis 5, **dadurch gekennzeichnet,** daß der das Trägerprofil (2) umgebende Polyurethanschaum (PUR) wenigstens zum Teil aus Recyclat besteht.

7. Verfahren zur Herstellung eines Schaumteils nach einem der Ansprüche 1 bis 6, wobei die Befestigungselemente (1) in eine beheizbare Form (18) eingelegt werden, flüssiges Polyurethan (PUR) eingefüllt wird, die Form (18) geschlossen und erwärmt wird, so daß das Polyurethan (PUR) aufschäumt und die Befestigungselemente (1) einschäumt, wobei die Befestigungselemente (1) in der Form (18) vorgesehene Halteklemmen (20) eingeklemmt werden.

## Claims

1. A foam part of polyurethane or the like, in particular for use as a support for back-rests, seat surfaces or the like of vehicle seats, having foam-covered attaching elements (1) for attaching covers, characterized in that the attaching elements (1) have a bearing profile (2) which comprises a preferably wide-mesh network and is at least partially enclosed in foam of polyurethane (PU) or the like before being covered by the foam part (19).

2. A foam part according to Claim 1, characterized in that the bearing profile (2) is made from polythene, jute, gauze, fleece or the like.

3. A foam part according to Claim 1 or 2, characterized in that the bearing profile (2) has a U-shaped, circular or rectangular cross-section.

4. A foam part according to one of Claims 1 to 3, characterized in that the bearing profile (2) has at least one holding portion (4) projecting preferably parallel to the central plane of the foam part (19).

5. A foam part according to Claim 4, characterized in that the at least one holding portion (4) is not enclosed in foam of polyurethane (PU).

6. A foam part according to one of Claims 1 to 5, characterized in that the polyurethane foam (PU) surrounding the bearing profile (2) is made at least partly from recycled material.

7. A process for producing a foam part according to one of Claims 1 to 6, in which the attaching elements (1) are placed in a heatable mould (18), liquid polyurethane (PU) is poured in, and the mould (18) is closed and heated so that the polyurethane (PU) foams and covers the attaching elements (1) in foam, the attaching elements (1) being clamped in holding clamps (20) provided in the mould (18).

## Revendications

1. Elément en mousse de polyuréthane ou similaire, en particulier destiné à être utilisé comme support dans des dossiers, des assises ou similaires de sièges de véhicules, comportant des éléments de fixation (1) scellés dans la mousse pour la fixation de revêtements, caractérisé par le fait que les éléments de fixation (1) comportent un profilé-support formé d'un filet de préférence à mailles larges qui est au moins partiellement enduit de polyuréthane (PUR) ou similaire avant son insertion dans' l'élément en mousse (19).

2. Elément en mousse selon la revendication 1, caractérisé par le fait que le profilé-support (2) est réalisé en polyéthylène, en jute, en gaze, en feutre ou similaire.

3. Elément en mousse selon la revendication 1 ou 2, caractérisé par le fait que le profilé-support (2) présente une section en U, une section circulaire ou une section rectangulaire.

4. Elément en mousse selon une des revendications 1 à 3, caractérisé par le fait que le profilé-support (2) présente au moins une partie de retenue (4) en porte-à-faux de préférence parallèle au plan médian de l'élément en mousse (19).

5. Elément en mousse selon la revendication 4, caractérisé par le fait que la partie de retenue (4) au nombre d'au moins une n'est pas enrobée de polyuréthane (PUR).

6. Elément en mousse selon une des revendications 1 à 5, caractérisé par le fait que la mousse de polyuréthane qui entoure le profilé-support (2) se compose au moins en partie de produit de recyclage.

7. Procédé de fabrication d'un élément en mousse selon une des revendications 1 à 6, selon lequel on place les éléments de fixation (1) dans un moule (18) pouvant être chauffé, on remplit le moule de polyuréthane liquide (PUR), on ferme le moule et on le chauffe, de telle sorte que le polyuréthane (PUR) s'expanse et enrobe les éléments de fixation (1), les éléments de fixation (1) étant serrés dans des pinces de maintien (20) prévues à l'intérieur du moule (18).
